# EUROPÄISCHE PATENTANMELDUNG

(11) **EP 3 795 260 A1**
(43) Veröffentlichungstag der Anmeldung: **24.03.2021**
(21) Anmeldenummer: 19198509.2
(22) Anmeldetag: 20.09.2019
(51) Int. Cl.: B05B 13/02, B05B 16/00

(54) **VORRICHTUNG ZUR OBERFLÄCHENBEHANDLUNG VON WERKSTÜCKEN**

(71) Anmelder: Haug Intelligente Poliersysteme GmbH, 72189 Vöhringen (DE)
(72) Erfinder: Wälde, Rainer, 72250 Freudenstadt (DE)
(74) Vertreter: Späth, Dieter

(57) **Zusammenfassung**

Zum Entlacken von Fahrzeugrädern (5) schlägt die Erfindung eine modular aus kastenförmigen Modulen (6) zusammengesetzte Vorrichtung (1) mit einer durchgehenden Linearfördereinrichtung (20) und Düsen (25) zum Sprühen eines flüssigen Entschlackungsmittels auf Außenseiten der Fahrzeugräder (5) vor.

## Beschreibung

Die Erfindung betrifft eine Vorrichtung zur Oberflächenbehandlung von Werkstücken mit den Merkmalen des Oberbegriffs des Anspruchs 1. Insbesondere ist die Vorrichtung zur Oberflächenbehandlung von Fahrzeugrädern und speziell zum Entlacken von Fahrzeugrädern, das heißt zum Entfernen von Lack oder einer anderen Beschichtung von Fahrzeugrädern oder allgemein von Werkstücken vorgesehen.

Die erfindungsgemäße Vorrichtung weist eine Förderstrecke auf, entlang der Werkstückhalter mit gleichen oder verschiedenen Abständen hintereinander angeordnet sind, die entlang der Förderstrecke beweglich sind. Die Förderstrecke ist ein Weg, entlang dem die Werkstückhalter zur Oberflächenbehandlung der Werkstücke durch die Vorrichtung bewegt werden.

Des Weiteren weist die erfindungsgemäße Vorrichtung eine Linearfördereinrichtung zum Bewegen der Werkstückhalter entlang der Förderstrecke auf. "Linear" bedeutet eine Bewegung entlang einer gedachten Linie, die beispielsweise gerade sein oder gerade Abschnitte aufweisen und/oder Kurven, eventuell auch Knicke oder Abwinklungen aufweisen kann. Die Linearfördereinrichtung ist ein Antrieb, der die Werkstückhalter vorzugsweise gemeinsam allerdings nicht zwingend ständig mit gleicher Geschwindigkeit entlang der Förderstrecke durch die Vorrichtung bewegt.

Die Erfindung sieht einen modularen Aufbau der Vorrichtung vor, es sind Module entlang der Förderstrecke hintereinander angeordnet, durch die die Förderstrecke und die Linearfördereinrichtung durchgehen. Es lassen sich grundsätzlich beliebig viele Module hintereinander anordnen, wobei sich "hintereinander" auf die Förderstrecke bezieht. Die Module können nicht nur gerade hintereinander angeordnet sein, sondern beispielsweise auch bogenförmig, abgewinkelt oder parallel nebeneinander, so dass die Förderstrecke beispielsweise mäanderförmig durch die Module durchgeht. Durch den modularen Aufbau lässt sich die Vorrichtung an gegebene Platzverhältnisse anpassen.

Wie geschrieben lassen sich grundsätzlich beliebig viele Module hintereinander anordnen, wodurch unterschiedliche Längen der Vorrichtung möglich und auch Module zusammenstellenbar sind, die unterschiedliche Aufgaben wie Entlacken, Waschen und Trocknen wahrnehmen.

Jedes der Module weist einen Teil der Förderstrecke und einen Teil der Linearfördereinrichtung auf. Vorzugsweise werden die Teilförderstrecken und/oder Teile der Linearfördereinrichtung automatisch durch das Aufstellen oder Anordnen der Module hintereinander entlang der Förderstrecke zu der durch die Module durchgehenden Förderstrecke und/oder zu dem durch die Module durchgehenden Linearförderer zusammengesetzt beziehungsweise verbunden. Auch ist es möglich, dass die Förderstrecken und/oder die Teile der Linearfördereinrichtung der einzelnen Module nach dem Aufstellen oder Anordnen der Module verbunden werden müssen. Die Linearfördereinrichtung kann einen Antrieb aufweisen, der an oder in einem der Module oder auch außerhalb der Module angeordnet ist.

Die Erfindung ermöglicht einen variablen Aufbau der Vorrichtung zur Oberflächenbehandlung der Werkstücke mit standardisierten Modulen und eine Anpassung an die Werkstücke und die Oberflächenbehandlung.

Eine Ausgestaltung der Erfindung sieht einen Endlosförderer mit einem umlaufenden Zugmittel wie beispielsweise einer Kette oder einem Seil vor, das durch die Module der Vorrichtung durchgeführt ist. Möglich sind auch mehrere Endlosförderer, die jeweils durch einen Teil der Module der Vorrichtung durchgehen. Das Zugmittel kann durch die Module oder außerhalb der Module zurück geführt sein.

Insbesondere weist jedes der Module eine oder mehrere Zugmittelführungen auf, die das Zugmittel des Endlosförderers im jeweiligen Modul führen. Nach dem Anordnen oder Aufstellen der Module muss lediglich das Zugmittel an oder in den Zugmittelführungen der Module angeordnet werden.

Vorzugsweise weist jedes Modul eine Führung für die Werkstückhalter auf, die die Werkstückhalter in dem jeweiligen Modul führen. Durch das Anordnen oder Aufstellen der Module werden die Führungen in den einzelnen Modulen zu einer Führung durch alle Module zusammengesetzt. An einem Übergang zwischen zwei Modulen können die Führungen stumpf aneinander stoßen, ineinander oder zusammen gesteckt oder in anderer Weise verbunden sein, wobei ein etwaiges Verbinden der Führungen der einzelnen Module wie geschrieben automatisch durch das Anordnen oder Aufstellen der Module erfolgen kann oder die Führungen der einzelnen Module werden nach dem Anordnen oder Aufstellen der Module verbunden.

Eine Ausgestaltung der Erfindung sieht vor, dass die oder ein Teil der Module der erfindungsgemäßen Vorrichtung eine oder mehrere Sprüheinrichtungen zum Sprühen eines Sprühmittels auf Werkstücke, die an den Werkstückhalter befestigt sind, aufweist. Zum Entlacken ist das Sprühmittel insbesondere ein flüssiges Entlackungsmittel. Andere Sprühmittel sind beispielsweise Wasser oder ein flüssiges Reinigungsmittel. Auch ein Oberflächenstrahlen der Werkstücke wie Sandstrahlen oder Strahlen mit anderen festen kleinen Teilen wie Glasperlen, Glasgranulat, Stahlkugeln, Korund ist möglich.

Eine Ausgestaltung der Erfindung sieht Werkzeuge zu einer trennenden, das heißt mechanischen beziehungsweise spanenden Oberflächenbearbeitung der Werkstücke in einem oder mehreren Modulen der Vorrichtung vor. Solche Werkzeuge können beispielsweise rotierende Stahlbürsten sein. Eine Vorrichtung mit Modulen zum Sprühen und Modulen zur trennenden Oberflächenbearbeitung ist möglich.

Eine bevorzugte Ausgestaltung der Erfindung sieht einen Drehantrieb für die Werkstückhalter vor, so dass die Werkstücke von verschiedenen Seiten bearbeitet werden können.

Eine Weiterbildung sieht vor, dass der Drehantrieb der Werkstückhalter von der Linearfördereinrichtung angetrieben wird, das heißt die Linearfördereinrichtung, die die Werkstückhalter entlang der Förderstrecke durch die Module der Vorrichtung bewegt, bewirkt auch die Drehbewegung der Werkstückhalter.

Eine Ausgestaltung der Erfindung sieht Werkstückhalter zum Befestigen von vier Autorädern vor, so dass vier Autoräder eines Kraftwagens an einem Werkstückhalter befestigt und gemeinsam durch die Vorrichtung bewegt und bearbeitet werden können.

Eine Ausgestaltung der Erfindung sieht Werkstückhalter zu einem Befestigen von zwei Autorädern einander gegenüber mit einander abgewandten Außenseiten vor. Insbesondere können vier Autoräder jeweils paarweise einander gegenüber mit einander abgewandten Außenseiten oder vier Autoräder jeweils um 90° versetzt mit nach außen gerichteten Außenseiten an einem Werkstückhalter befestigt werden. Dadurch können die vier Autoräder eines Kraftwagens gemeinsam durch die Vorrichtung bewegt und bearbeitet werden. Weil die Oberflächenbehandlung der Außenseiten der Autoräder wichtig ist, sind die Außenseiten einander abgewandt und dadurch für die Oberflächenbehandlung zugänglich. Die Außenseite eines Autorads ist die Seite, die sich außen befindet, wenn das Autorad in vorgesehener Weise an einem Kraftwagen befestigt ist. Es ist zugleich die Sichtseite des Autorads, die sichtbar ist, wenn das Autorad in vorgesehener Weise an dem Kraftwagen befestigt ist.

Für eine stabile Befestigung der Werkstücke sieht eine Ausgestaltung der Erfindung hängende Werkstückhalter vor. Das heißt die Werkstückhalter sind oberhalb ihres Schwerpunkts und oberhalb eines gemeinsamen Schwerpunkts des Werkstückhalters mit dem oder den an ihm befestigten Werkstücken geführt. Beispielsweise weist der Werkstückhalter ein oder mehrere Laufräder auf, die auf oder in einer Laufschiene wälzen, die sich oberhalb beziehungsweise an oder nahe an einem oberen Ende des Werkstückhalters befindet.

Eine bevorzugte Ausgestaltung der Erfindung sieht mindestens ein Modul mit einer Prozesstemperatur von etwa 85° Celsius vor. Die Prozesstemperatur kann beispielsweise eine in dem Modul herrschende Temperatur, eine Temperatur eines in dem Modul auf die Werkstücke gesprühten Sprühmittels und/oder eine Temperatur oder Oberflächentemperatur des Werkstücks sein. Die Prozesstemperatur ist beispielsweise eine Temperatur, bei oder mit der die Oberflächenbehandlung der Werkstücke erfolgt. Das Modul kann beispielsweise eine Heizeinrichtung zum Erwärmen seines Innenraums und/oder des Sprühmittels und/oder beispielsweise auch einen Wärmestrahler und/oder eine Einrichtung zum induktiven Erwärmen der Werkstücke aufweisen.

Sämtliche in der Beschreibung genannte und/oder der Zeichnung dargestellte Merkmale können einzeln für sich oder in jeder beliebigen Kombination bei Ausführungen der Erfindung verwirklicht sein. Ausführungen der Erfindung, die nicht alle, sondern nur einen Teil der Merkmale eines Anspruchs, auch des unabhängigen Anspruchs, aufweisen, sind möglich.

Die Erfindung wird nachfolgend anhand eines in der Zeichnung dargestellten Ausführungsbeispiels näher erläutert. Es zeigen:
- Figur 1: eine Vorrichtung gemäß der Erfindung in perspektivischer Darstellung;
- Figur 2: einen Längsmittelschnitt eines Moduls der Vorrichtung aus Figur 1 ebenfalls in perspektivischer Darstellung; und
- Figur 3: eine Einzelheit einer Linearfördereinrichtung der Vorrichtung gemäß Pfeil III in Figur 1.

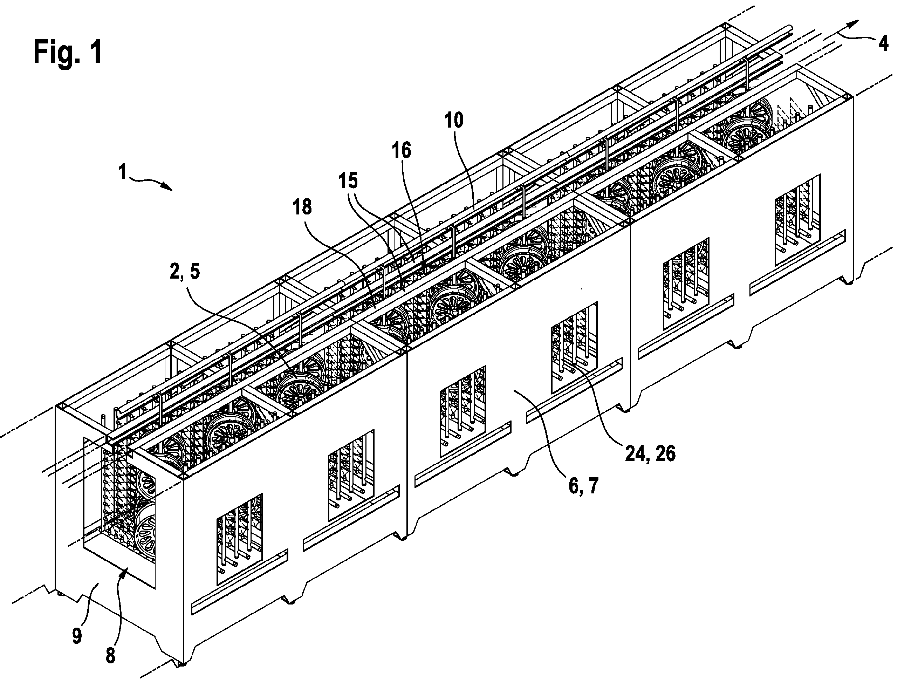

Die in Figur 1 dargestellte, erfindungsgemäße Vorrichtung 1 ist zu einer chemischen, mechanischen oder sonstigen Oberflächenbehandlung von Werkstücken 2 im Durchlauf vorgesehen. Die Werkstücke 2 werden an Werkstückhaltern 3 befestigt entlang einer Förderstrecke 4 durch die Vorrichtung bewegt. Im Ausführungsbeispiel dient die Vorrichtung 1 zu einem Entlacken von Fahrzeugrädern 5.

Die Vorrichtung 1 ist modular aufgebaut, sie weist Module 6 auf, die im Ausführungsbeispiel in einer geraden Linie hintereinander und unmittelbar ohne Zwischenraum aneinander anschließend angeordnet sind, wodurch sich eine gerade Förderstrecke 4 ergibt. Möglich ist auch eine abgewinkelte Anordnung von Modulen 6 oder die Anordnung von Modulen 6 in parallelen Reihen, durch die die Förderstrecke 4 mäanderförmig hindurch geht (nicht dargestellt).

Jedes Modul 6 weist ein kastenförmiges Gehäuse 7 mit Öffnungen 8 in Querwänden 9 auf, durch die die Werkstückhalter 3 mit den Werkstücken 2, im Ausführungsbeispiel also mit den Fahrzeugrädern 5 von einem in ein nächstes Modul 6 gelangen. Die Module 6 sind mit ihren Querwänden 9 aneinander anliegend angeordnet und gegenseitig mit Dichtungen abgedichtet.

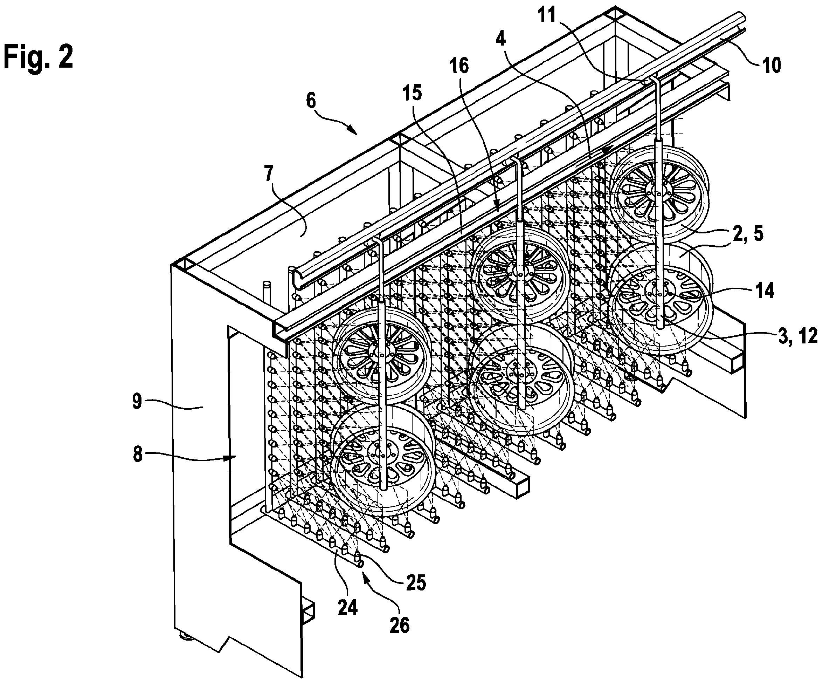

Die Module 6 weisen oben seitlich ihrer Längsmitte eine im Querschnitt C-förmige Laufschiene 10 auf, mit der die Werkstückhalter 3 entlang der Förderstrecke 4 beweglich geführt sind. Die Laufschienen 10 der Module 6 stoßen aneinander, so dass sich eine durch die Module 6 der Vorrichtung 1 durchgehende Förderstrecke 4 ergibt, wobei die Laufschienen 10 die Förderstrecke 4 festlegen. Die Laufschienen 10 können allgemein auch als Führung für die Werkstückhalter 3 aufgefasst werden, die die Werkstückhalter 3 entlang der Förderstrecke 4 durch die Vorrichtung 1 bewegbar führt. Figur 2 zeigt einen Längsmittelschnitt eines der Module 6 der erfindungsgemäßen Vorrichtung 1.

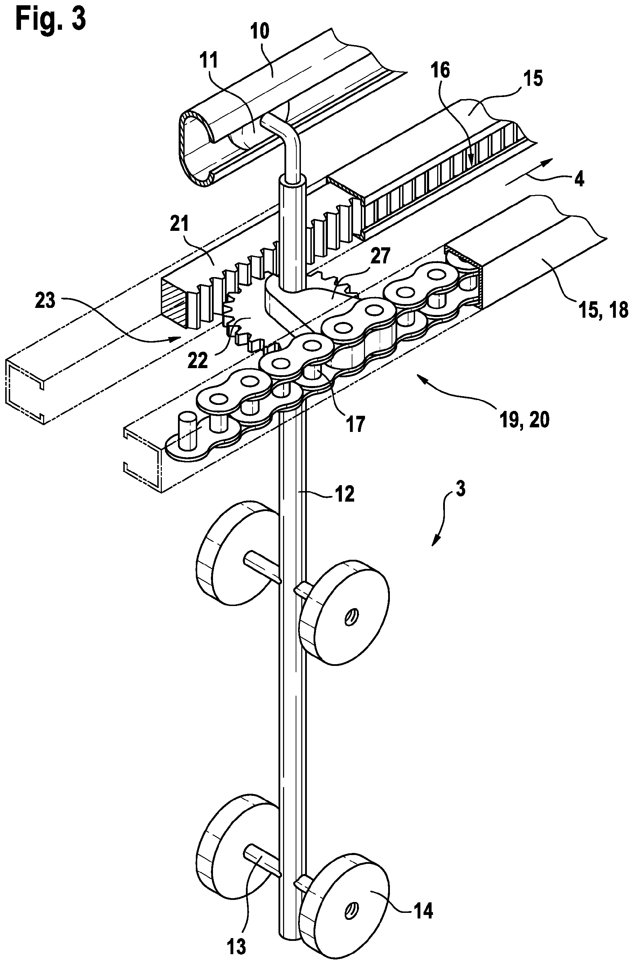

Die Werkstückhalter 3 weisen ein Laufrad 11 auf, welches in der Laufschiene 10 wälzt (Figur 3). Seitlich am Laufrad 11 hängt ein Stab 12 als Teil des Werkstückhalters 3 nach unten, von dem unterhalb der Laufschiene 10 und innerhalb der Gehäuse 7 der Module 6 der Vorrichtung 1 zwei Querstäbe 13 abstehen, an deren Enden Nabenhalter 14 angeordnet sind, an denen die die Werkstücke 2 bildenden Fahrzeugrädern 5 mit ihren Radnaben befestigbar sind. Der Stab 12 ist um seine Achse drehbar an dem Laufrad 11 befestigt. Im Ausführungsbeispiel sind an jedem Werkstückhalter 3 vier Fahrzeugrädern 5 paarweise übereinander an einem Werkstückhalter 3 befestigbar, wobei Außenseiten der Fahrzeugrädern 5 einander abgewandt sind. Die Außenseiten der Fahrzeugrädern 5 befinden sich außen, wenn die Fahrzeugräder 5 in vorgesehener Weise an einem nicht dargestellten Kraftwagen befestigt sind. Es lassen sich also im Ausführungsbeispiel die vier Fahrzeugräder 5 eines Personenkraftwagens an einem Werkstückhalter 3 befestigen und gemeinsam durch die Vorrichtung 1 bewegen und bearbeiten.

Im Ausführungsbeispiel unterhalb der Laufschienen 10 weisen die Module 6 beiderseits ihrer Längsmitten geschlitzte Rechteckrohrprofile 15 auf, zwischen denen ein längs durch die Module 6 durchgehende Zwischenraum 16 besteht, durch den die Werkstückhalter 3 durchgehen. Die Rechteckrohrprofile 15 der Module 6 stoßen ebenfalls aneinander, so dass sie sich entlang der Förderstrecke 4 durch die Vorrichtung 1 erstrecken.

In den Rechteckrohrprofilen 15 auf einer Seite des Zwischenraums 16 ist eine Kette als Zugmittel 17 eines Linearförderer 18 durch die Module 6 der Vorrichtung 1 geführt, an der die Stäbe 12 der Werkstückhalter 3 mit einem Mitnehmer 27 drehbar befestigt sind, so dass die Werkstückhalter 3 mit der das Zugmittel 17 bildenden Kette entlang der Förderstrecke 4 durch die Vorrichtung 1 bewegbar sind. Die Kette ist außerhalb der Module 6 zurück geführt (nicht dargestellt), wobei eine Rückführung der Kette innerhalb der Module 6 ebenfalls möglich ist.

Die Rechteckrohrprofile 15, in denen die das Zugmittel 17 bildende Kette geführt ist, können allgemein auch als Zugmittelführung 18 und die das Zugmittel 17 bildende Kette und die die Zugmittelführung 18 bildenden Rechteckrohrprofile 15 als Endlosförderer 19 und als Linearfördereinrichtung 20 der erfindungsgemäßen Vorrichtung 1 zur Oberflächenbehandlung von Werkstücken 2 aufgefasst werden.

In den Rechteckrohrprofilen 15 auf der anderen Seite des Zwischenraums 16 ist eine Zahnstange 21 angeordnet, mit der ein Zahnrad 22 kämmt, das drehfest auf dem Stab 12 des Werkstückhalters 3 angeordnet ist, so dass sich der Stab 12 um seine Achse dreht, wenn er entlang der Förderstrecke 4 durch die Vorrichtung 1 bewegt wird. Dadurch bewegen sich die Nabenhalter 14 der Werkstückhalter 3 und die an ihnen befestigten Fahrzeugräder 5 auf Kreisbahnen um die Stäbe 12, wenn die Werkstückhalter 3 durch die Vorrichtung 1 bewegt werden. Die mit der Zahnstange 21 kämmenden Zahnräder 22 bilden einen Drehantrieb 23 für die Werkstückhalter 3, der von dem Endlosförderer 19 beziehungsweise der Linearfördereinrichtung 20 angetrieben wird, wenn der Endlosförderer 19 beziehungsweise die Linearfördereinrichtung 20 die Werkzeughalter 3 durch die Vorrichtung 1 bewegt.

In Querebenen der Module 6 sind U-förmige Rohre 24 seitlich außerhalb und unterhalb der Fahrzeugräder 5 beziehungsweise Werkstücke 2 angeordnet, so dass die an den Werkstückhaltern 3 befestigten Fahrzeugräder 5 beziehungsweise Werkstücke 2 durch die U-förmige Rohre 24 hindurch bewegt werden können. In jedem Modul 6 sind mehrere solche U-förmige Rohre 24 in der Förderrichtung 4 hintereinander angeordnet. Die U-förmigen Rohre 24 weisen Düsen 25 auf, durch die Sprühmittel auf die Fahrzeugräder 5 beziehungsweise die Werkstücke 2 gesprüht werden kann, wenn die Fahrzeugräder 5 beziehungsweise die Werkstücke 2 entlang der Förderstrecke 4 durch die Module 6 der erfindungsgemäßen Vorrichtung 1 bewegt werden. Die U-förmigen Rohre 24 mit den Düsen 25 bilden Sprüheinrichtungen 26 zum Sprühen des Sprühmittels auf die die Werkstücke 2 bildenden Fahrzeugräder 5, insbesondere auf deren Außenseiten.

In einem Teil der Module 6 wird ein flüssiges Entlackungsmittel auf die die Werkstücke 2 bildenden Fahrzeugräder 5 gesprüht, um die Fahrzeugräder 5 zu Entlacken. In einem oder mehreren der darauf folgenden Module 6 wird Wasser und/oder ein flüssiger Felgenreiniger auf die Fahrzeugräder 5 gesprüht, um gelöste Lackreste und das Entlackungsmittel von den Fahrzeugrädern 5 zu entfernen.

Es können Module 6 mit beispielsweise feststehenden oder rotierenden Drahtbürsten zu einer Oberflächenbehandlung der Werkstücke 2, insbesondere zu einem mechanischen Entfernen von Lack oder allgemein zu einer trennenden Oberflächenbearbeitung insbesondere der Außenseiten der Fahrzeugräder 5 vorgesehen sein (nicht dargestellt).

Die Module 6 oder zumindest ein Teil der Module 6 weist eine nicht dargestellte Heizeinrichtung auf, mit der ein Innenraum der Module 6 auf eine Prozesstemperatur von beispielsweise 80° Celsius erwärmt werden kann.

Es lassen sich grundsätzlich beliebig viele und beliebig ausgestattete Module 6 hintereinander anordnen.

## Patentansprüche

1. Vorrichtung zur Oberflächenbehandlung von Werkstücken, insbesondere von Fahrzeugrädern, mit entlang einer Förderstrecke (4) hintereinander angeordneten und entlang der Förderstrecke (4) beweglichen Werkstückhaltern (3) zum Befestigen der Werkstücke (2) und mit einer Linearfördereinrichtung (20) zum Bewegen der Werkstückhalter (3) entlang der Förderstrecke (4), **dadurch gekennzeichnet, dass** die Vorrichtung (1) modular aufgebaut ist und Module (6) aufweist, die entlang der Förderstrecke (4) hintereinander angeordnet sind, so dass die Förderstrecke (4) und die Linearfördereinrichtung (20) durch die Module (6) durchgehen.

2. Vorrichtung nach Anspruch 1, **dadurch gekennzeichnet, dass** die Linearfördereinrichtung (20) einen Endlosförderer (19) mit einem umlaufenden Zugmittel (17) aufweist, das entlang der Förderstrecke (4) durch die Module (6) geführt ist.

3. Vorrichtung nach Anspruch 2, **dadurch gekennzeichnet, dass** die Module (6) Zugmittelführungen (18) aufweisen, die das Zugmittel (17) von Modul (6) zu Modul (6) durch die Vorrichtung (1) führen.

4. Vorrichtung nach einem oder mehreren der Ansprüche 1 bis 3, **dadurch gekennzeichnet, dass** die Module (6) Führungen (10) für die Werkstückhalter (3) aufweisen, die von Modul (6) zu Modul (6) ineinander übergehen, so dass sich die unterbrechungsfreie Förderstrecke (4) durch die Module (6) ergibt.

5. Vorrichtung nach einem oder mehreren der vorhergehenden Ansprüche, **dadurch gekennzeichnet, dass** Module (6) Sprüheinrichtungen (26) aufweisen, die ein Sprühmittel in Richtung von Werkstücken (2) sprühen, die an den Werkstückhaltern (3) befestigt sind.

6. Vorrichtung nach einem oder mehreren der vorhergehenden Ansprüche, **dadurch gekennzeichnet, dass** die Module (6) Werkzeuge zu einer trennenden Oberflächenbearbeitung von Werkstücken (2), die an den Werkstückhaltern (3) befestigt sind, aufweisen.

7. Vorrichtung nach einem oder mehreren der vorhergehenden Ansprüche, **dadurch gekennzeichnet, dass** die Vorrichtung (1) einen Drehantrieb (23) für die Werkstückhalter (3) aufweist.

8. Vorrichtung nach Anspruch 7, **dadurch gekennzeichnet, dass** der Drehantrieb (23) von der Linearfördereinrichtung (20) angetrieben wird.

9. Vorrichtung nach einem oder mehreren der vorhergehenden Ansprüche, **dadurch gekennzeichnet, dass,** die Vorrichtung (1) Werkstückhalter (3) zum Befestigen von vier Autorädern (5) aufweist.

10. Vorrichtung nach einem oder mehreren der vorhergehenden Ansprüche, **dadurch gekennzeichnet, dass** die Vorrichtung (1) Werkstückhalter (3) zu einem Befestigen von zwei Autorädern (5) einander gegenüber mit einander abgewandten Außenseiten aufweist.

11. Vorrichtung nach einem oder mehreren der vorhergehenden Ansprüche, **dadurch gekennzeichnet, dass** die Werkstückhalter (3) hängend angeordnet sind.

12. Vorrichtung nach einem oder mehreren der vorhergehenden Ansprüche, **dadurch gekennzeichnet, dass** mindestens ein Modul (6) eine Prozesstemperatur von etwa 85°C aufweist.
